# EUROPÄISCHE PATENTSCHRIFT

(11) **EP 2 330 704 B1**
(45) Veröffentlichungstag und Bekanntmachung des Hinweises auf die Patenterteilung: **21.09.2016**
(21) Anmeldenummer: 10401188.7
(22) Anmeldetag: 09.11.2010
(51) Int. Cl.: H02G 3/12

(54) **Anordnung zur Befestigung einer Installationsdose für Elektroinstallationen**
Arrangement for fixing an installation box for electrical installations
Dispositif de fixation d'une boite d'installation pour installations électriques

(30) Priorität: 02.12.2009 DE 102009056643; 20.09.2010 DE 102010046075
(43) Veröffentlichungstag der Anmeldung: 08.06.2011
(73) Patentinhaber: Kaiser GmbH & Co. KG, 58579 Schalksmuehle (DE)
(72) Erfinder: Langenohl, Benedikt, 58579 Schalksmühle (DE); Viola, Marc, 58339 Breckerfeld (DE); Walter, Rüdiger, 53125 Bonn (DE); Kaiser, Burkard, 58509 Lüdenscheid (DE); Schütze, Andreas, 45659 Recklinghausen (DE)
(74) Vertreter: Köchling, Conrad-Joachim

(56) Entgegenhaltungen:
- EP-A2- 1 775 814
- DE-A1- 2 526 890
- DE-U1- 20 022 269
- FR-A1- 2 766 024
- GB-A- 2 117 573
- US-A- 2 798 630

## Beschreibung

Die Erfindung betrifft eine Anordnung zur Befestigung einer Installationsdose für Elektroinstallationen in einer Wand, einer Hohlwand oder einer wärmegedämmten Wandung oder Fassade von Gebäuden, gemäß Oberbegriff des Anspruches 1.

Ferner betrifft die Erfindung eine Anordnung zur Befestigung einer Installationsdose für Elektroinstallationen in einer Wand, einer Hohlwand oder einer wärmegedämmten Wandung oder Fassade von Gebäuden, gemäß Oberbegriff des Anspruches 2.

Eine derartige Anordnung ist beispielsweise aus der FR 2 766 024 A1, der GB 2 117 573 A und der US 2 798 630 A bekannt. Bei den bekannten Lösungen sind die Befestigungsmittel jeweils separate Elemente, die separat gefertigt und montiert werden müssen, was aufwendig ist und hohe Kosten verursacht.

Zu heutiger Zeit sind in vielen Fällen wärmegedämmte Fassaden an Gebäuden vorgesehen. Hierbei ist vor einer massiven Gebäudewand, die beispielsweise aus Beton besteht oder aus Mauerwerk, eine relativ dicke Dämmschicht aus Dämmmaterialien angebracht. Auf diese wiederum ist eine Außenputzschicht aufgebracht. Bei solchen Fassadenaufbauten ist es häufig notwendig, Kabel, die im Baukörper installiert sind und die die massive Wandung durchsetzen, durch die wärmegedämmte Fassade zu führen, um entsprechende Installationen, also Schalter, Steckdosen und dergleichen anzubringen. Hierzu wird bisher mit einem geeigneten Werkzeug ein Loch, beispielsweise eine zylindrische Bohrung in die Dämmfassade eingebracht, wobei die Lochung natürlich den Außenputz durchgreift und mindestens in die Dämmschicht eindringt. Diese Bohrung oder sacklochartige Ausnehmung wird in einem Bereich eingebracht, in dem ein Kabel verlegt ist, so dass das Kabel in der entsprechenden Ausnehmung zugreiflich ist. Häufig werden solche Ausnehmungen bis auf das vorhandene Mauerwerk geführt. Um nun die entsprechende Verkabelung vornehmen zu können, wird eine entsprechende Installationsdose, beispielsweise eine Hohlwanddose in die Ausnehmung eingesetzt. Schwierigkeiten bereitet dabei die Befestigung dieser Installationsdose. Herkömmliche Befestigungen nach Art einer Hohlwanddose versagen hier, weil die Dämmschicht keine entsprechenden Haltekräfte aufnehmen kann, so dass beim Anziehen der üblichen Haltepratzen der Hohlwanddosen das Dämmmaterial zerstört wird, aber kein sicherer Sitz der Installationsdose erreicht wird. Aus diesem Grunde ist man schon dazu übergegangen, solche Installationsdosen mittels Kleber in der entsprechenden Ausnehmung zu fixieren. Eine solche Anordnung gewährleistet aber wegen der Anordnung in der Dämmschicht keinen dauerhaft festen Sitz.

Im Stand der Technik ist es ferner bekannt, in Wände, Hohlwände oder auch in eine wärmegedämmte Wandung oder Fassade von Gebäuden Elektroinstallationen einzubringen. Insbesondere bei Hohlwänden aber auch bei anderen Wandungen oder Fassaden ist es üblich, hinter der entsprechenden Wandung oder in einem Hohlraum hinter der Hohlwand elektrische Kabel zuzuführen, die in bestimmten Bereichen herausgeführt werden. In diesen Bereichen werden Installationsdosen angeordnet, um beispielsweise Schalter, Steckdosen oder ähnliche elektrische Installationselemente anzubringen. Bisher wird dazu mit einem geeigneten Werkzeug ein Loch, beispielsweise eine Durchgangsbohrung in eine entsprechende Wandung oder Hohlwand eingebracht. Beispielsweise wird vor einer Gebäudewand mit Abstand eine Hohlwand aus Gipskartonplatten oder aus einer Kombination von Gipskartonplatten und Schaumplatten als Dämmschicht angebracht. Um nun in eine solche Wandung eine Installationsdose einzubringen, wird mit einem geeigneten Werkzeug ein Loch eingebracht. In ein solches Loch wird eine Installationsdose eingesetzt, die dann mit hinterseitig der Wandung verlegten elektrischen Kabeln verbunden werden kann. Schwierigkeiten bereitet dabei die Befestigung einer solchen Installationsdose. Herkömmlich werden beispielsweise Hohlwanddosen dadurch befestigt, dass an der Dose Haltepratzen angebracht sind, die von vorn mittels Schrauben betätigt werden können, um diese gegen die Rückseite der Hohlwand, beispielsweise das Dämm-Material, anzuziehen. Bei mehrschichtigen Hohlwänden oder auch bei dünnen Hohlwänden wird häufig kein sicherer Sitz der Installationsdose erreicht. Aus diesem Grunde ist man dazu übergegangen, solche Installationsdosen mittels Kleber in den entsprechenden Ausnehmungen zu fixieren. Eine solche Anordnung gewährleistet aber wegen der Anordnung in einer entsprechenden Wandung, insbesondere Hohlwandung mit Wärmedämmung, keinen dauerhaft festen Sitz.

Eine Anordnung gattungsgemäßer Art ist aus der DE 200 22 269 U1 bekannt. Hierbei sind mechanische Befestigungsmittel als integrale Bestandteile einer Unterputzdose vorgesehen, die in Montagesolllage ausgeschwenkt werden können, um die Dose an einer Hohlwand zu fixieren. Die Betätigung der Befestigungsmittel und der sichere Sitz der bekannten Konstruktion ist verbesserungsbedürftig.

Ausgehend von diesem Stand der Technik liegt der Erfindung die Aufgabe zugrunde, eine Anordnung zur Befestigung einer Installationsdose gattungsgemäßer Art zu schaffen, mit der in einfacher Weise ein fester Sitz der Installationsdose in beliebigen Wandungen, insbesondere Hohlwandungen, oder in einer wärmegedämmten Fassade von Gebäuden erreicht wird.

Zur Lösung dieser Aufgabe wird vorgeschlagen, dass die Formteile hakenartig ausgebildet sind, wobei deren Schaft an der Installationsdose schwenkbeweglich angeformt ist entsprechende, mit einem geeigneten Werkzeug ausgebildete Ausnehmung eingebracht werden. Um die Installationsdose nun in dieser Lage zu fixieren, werden die Befestigungsmittel in eine alternative Position verstellt, in der sie über die Umfangslinien der Installationsdose vorragen. Diese Befestigungsmittel greifen dabei in die Laibung der entsprechenden Lochung der Wand, beispielsweise der Hohlwand oder auch der mit Dämmstoff kombinierten Wandschicht oder die Dämmschicht ein, in welcher die Installationsdose sitzt. Durch das Verstellen der Befestigungsmittel wird die Installationsdose in dieser Position fixiert und lagesicher gehalten. Die mechanischen Befestigungsmittel können in geeigneter Weise verstellbar an der Installationsdose gehalten sein. Beispielsweise können sie verschieblich angeordnet sein, so dass sie im Wesentlichen quer zur Einsatzöffnung der Installationsdose verschieblich sind und in die Vormontagelage oder die Montagesolllage verstellbar sind.

Um die Dose nun in dieser Lage zu fixieren, werden die Befestigungsmittel in eine alternative Position eingestellt, in der sie über die Umfangslinien der Installationsdose vorragen, also in die Dämmschicht eingreifen, in welcher die Installationsdose sitzt. In dieser Position ist die Installationsdose fixiert und lagesicher angeordnet.

Eine alternative Lösung der Aufgabe wird gemäß Anspruch 2 darin gesehen, dass die Formteile hakenartig ausgebildet sind, wobei deren Schaft an dem Hilfsrahmen schwenkbeweglich angeformt ist und deren Hakenspitze etwa rechtwinklig vom Schaft abragend nach radial außen gerichtet ist.

Bei dieser Ausgestaltung ist ein Hilfsrahmen vorgesehen, der vorzugsweise in seiner Form der Form einer üblichen Installationsdose angepasst ist, so dass die Installationsdose in diesen Hilfsrahmen einsetzbar beziehungsweise aus dem Hilfsrahmen entnehmbar ist. Zur Fixierung in der entsprechenden Lochung der Wandung oder Hohlwandung oder der wärmegedämmten Fassade kann der Hilfsrahmen zunächst in die entsprechende Ausnehmung eingesetzt werden. Sobald er seine Sollposition einnimmt, können die mechanischen Befestigungsmittel aus der Grundposition, in der sie in der Umfangsfluchtlinie
des Hilfsrahmens liegen oder hinter diese Umfangsfluchtlinie zurückliegen, in die Montagesolllage überführt werden, in der sie über die Umfangsfluchtlinie des Hilfsrahmens vorragen. In dieser Position greifen die mechanischen Befestigungsmittel an der Lochlaibung der entsprechenden Lochung an bzw. in das Material der Lochlaibung oder in die Dämmschicht der wärmegedämmten Fassade ein und fixieren den Hilfsrahmen. Nachfolgend kann dann eine handelsübliche Installationsdose in den Hilfsrahmen eingeschoben werden und in geeigneter Weise am Hilfsrahmen fixiert werden, so dass die Installationsdose zur Installation von entsprechenden Elementen zur Verfügung steht.

Der Vorteil einer solchen Ausgestaltung ist, dass die üblichen Installationsdosen weiterhin verwendet werden können und lediglich zusätzlich der Hilfsrahmen erforderlich ist, sofern eine solche Installationsdose in einen entsprechenden Wandüngsdurchbruch, z.B. einer Hohlwand, oder in eine wärmegedämmte Fassade eingesetzt und in dieser fixiert werden soll.

Bei beiden Lösungen sind die Befestigungsmittel integrale Bestandteile der Installationsdose oder des Hilfsrahmens.

Üblicherweise ist eine solche Installationsdose aus Kunststoff geformt. Ebenso kann der Hilfsrahmen aus Kunststoff geformt sein. Die mechanischen Befestigungsmittel können an diese entsprechenden Kunststoffteile angeformt sein, so dass sie einstückig mit diesen ausgebildet sind.

Erfindungsgemäß ist vorgesehen, dass die Formteile hakenartig ausgebildet sind, wobei deren Schaft an der Installationsdose oder dem Hilfsrahmen schwenkbeweglich angeformt ist und deren Hakenspitze etwa rechtwinklig vom Schaft abragend nach radial außen gerichtet ist.

Hierbei kann das Formteil etwa L-förmig ausgebildet sein, so dass der lange Schenkel der L-Form den Schaft und der kurze Schenkel der L-Form den Haken mit Hakenspitze bildet. Durch eine solche Ausbildung wird die Betätigung der Formteile erleichtert, weil der relativ lagen Schaft dazu zur Verfügung steht, das Befestigungsmittel in Form des Formteiles nach außen zu verschwenken, so dass der Haken mit der Hakenspitze in die Wärmedämmschicht der wärmegedämmten Fassade eindringt.

Weiterhin ist bevorzugt vorgesehen, dass die Befestigungsmittel nahe des in Montagesolllage außenliegenden Randes der Installationsdose oder des Hilfsrahmens schwenkbeweglich angeformte Formteile sind.

Hierbei kann die Schwenkachse, die die Schwenkbeweglichkeit der Befestigungsmittel ermöglicht, durch eine Art Filmscharnier gebildet sein. Die Schwenkachse kann bezogen auf die Mittellängsachse der Installationsdose oder des Hilfsrahmens parallel zu dieser Achse ausgerichtet sein oder quer zu dieser oder auch Zwischenlagen einnehmen. Es muss nur sichergestellt sein, dass die mechanischen Befestigungsmittel in eine Lage verschwenkbar sind, in der die Installationsdose oder der Hilfsrahmen störungsfrei in die entsprechende Lochung der Wandung oder in die Ausnehmung der wärmegedämmten Fassade einsetzbar ist und dass die Befestigungsmittel in der Montagesolllage derart verschwenkbar sind, dass sie in die Dämmschicht der
wärmegedämmten Fassade eindringen oder an der Lochlaibung oder hinter dieser anliegen und die Installationsdose oder den Hilfsrahmen somit lagesicher fixieren.

Auch kann vorgesehen sein, dass die Schwenkachse parallel zur Mittellängsachse der zylindrisch ausgebildeten Installationsdose oder des zylindrisch ausgebildeten Hilfsrahmens ausgerichtet ist.

Bevorzugt ist dabei vorgesehen, dass die Schwenkachse quer insbesondere rechtwinklig zur Mittellängsachse
der Installationsdose oder des Hilfsrahmens gerichtet verläuft.

Hierbei kann eine Anordnung von entsprechenden schwenkbaren Befestigungsmitteln mehrfach auf den Umfang der Installationsdose verteilt oder auf den Umfang des Hilfsrahmens verteilt angeordnet sein, ohne dass die Befestigungsmittel sich in der eingeschwenkten Vormontagelage stören oder überlagern.

Eine weiterhin bevorzugte Ausbildung wird darin gesehen, dass das hakenartige Formteil durch eine angeformte etwa dreieckige Wandung versteift ist, die mit einer Randkante am Schaft und mit einer Randkante am Haken angeformt ist und deren freie Randkante eine radial nach außen gerichtete Schneidkante bildet.

Hierdurch wird einerseits trotz der bevorzugten Ausbildung aus Kunststoff eine formstabile Ausbildung des hakenartigen Formteiles erreicht, so dass das hakenartige Formteil bei der bestimmungsgemäßen Benutzung nicht verformt wird, sondern tatsächlich, wie gewünscht, in das die Lochung umgebende Material oder in die wärmegedämmte Fassade eindringen kann. Dabei ist die Schneidkante zudem hilfreich und dient zur weiteren Arretierung des Formteiles in der Montagesollposition.

Des Weiteren ist bevorzugt vorgesehen, dass die hakenartigen Formteile auf ihrer dem Inneren der Installationsdose oder des Hilfsrahmens zugewandten Seite, vorzugsweise nahe des freien Endes des Schaftes, einen Handhabungsansatz aufweisen, so dass sie durch Angriff an diesem manuell oder mittels eines Werkzeuges aus der Montagesolllage in die Vormontagelage zurück bewegbar sind.

Sofern nach dem Einbau der Installationsdose oder des Hilfsrahmens festgestellt wird, dass dieser nochmals aus fixierten Position entnommen werden soll, kann hierbei der Handhabungsansatz manuell oder beispielsweise mit der Klinge eines Schraubendrehers benutzt werden, um das jeweilige hakenartige Formteil aus der Montagesolllage in die Vormontagelage zurückzuschwenken. In dieser Position kann dann der Hilfsrahmen oder die Installationsdose in einfacher Weise aus der Ausnehmung der Wandung entnommen werden.

Der Handhabungsansatz ist gemäß seiner Anordnung von dem Innenraum der Dose oder vom Innenraum, der durch den Hilfsrahmen aufgespannt ist, zugänglich, so dass also eine manuelle Zugreiflichkeit oder eine Zugreiflichkeit mittels eines Werkzeuges ermöglicht ist.

Um die Arretierung der Installationsdose oder des Hilfsrahmens in der Ausnehmung oder Lochung noch zu verbessern, ist vorgesehen, dass die Hakenspitze des Formteils als spitzes Flächenteil ausgebildet ist, dessen Flächenerstreckung in der Vormontagelage parallel zur Mündungsebene der Installationsdose oder des Hilfsrahmens gerichtet ist.

Hierdurch wird erreicht, dass bei in Montagesollposition befindlichen Befestigungsmitteln einer Verschiebung der Installationsdose oder des Hilfsrahmens in der Ausnehmung der Wandung entgegengewirkt wird.

Wie bei Installationsdosen an sich bekannt, ist zudem vorgesehen, dass die Installationsdose oder der Hilfsrahmen im Wesentlichen zylindrisch ausgebildet sind und am in Montagesolllage außenliegenden Ende einen Flanschrand aufweisen.

Hierbei kann bevorzugt vorgesehen sein, dass die Installationsdose oder der Hilfsrahmen im Anschluss an den Flanschrand einen ringförmigen Mantelbereich aufweisen, dessen Außendurchmesser zum Flanschrand hin zunimmt, so dass ein konischer Mantelteilbereich gebildet ist.

Durch diesen konischen Mantelbereich wird erreicht, dass dann, wenn die Installationsdose sich in der Montagesollposition befindet oder der Hilfsrahmen sich in der Montagesollposition befindet, dieser konische Mantelbereich sich in der Lochlaibung der entsprechenden Ausnehmung abstützt, wobei zum Beispiel in diesem Bereich die Putzschicht ausgebildet ist, die die Wärmedämmung der Fassade überdeckt. Es wird durch diese Ausbildung ein wackelfreier Sitz in der entsprechenden Ausnehmung der Wand erreicht.

Weiterhin ist für den sicheren Sitz der Installationsdose beziehungsweise des Hilfsrahmens in der Einbausollposition hilfreich, wenn mit Abstand vom Flanschrand auf dem Außenmantel der
Installationsdose oder auf Außenmantelteilflächen des Hilfsrahmens sich in Umfangsrichtung erstreckende Rippen oder Rippengruppen ausgebildet sind.

Um zu erreichen, dass insbesondere die Installationsdose in der Einbausituation zugluftdicht in der entsprechenden Ausnehmung der wärmegedämmten Fassade oder dergleichen sitzt, ist vorgesehen, dass die Installationsdose einen Boden an ihrem dem Flanschrand abgewandten Ende aufweist, wobei am Mantel bodennah eine umlaufende, radial vorragende Dichtlippe ausgebildet ist, vorzugsweise aus elastischem Werkstoff.

In der Einbausolllage stützt sich diese umlaufende Dichtlippe an der umgebenden Materialschicht, beispielsweise aus Wärmedämmmaterial ab und bildet eine Abdichtung gegen durchtretende Zugluft oder eintretende Feuchtigkeit.

Aus dem gleichen Grunde kann vorgesehen sein, dass nahe des Flanschrandes vorzugsweise im Bereich des konischen Mantelbereiches eine radial vorragende, in Umfangsrichtung verlaufende Dichtlippe ausgebildet ist, vorzugsweise aus elastischem Werkstoff.

Zudem ist bevorzugt vorgesehen, dass die Installationsdose als übliche Hohlwanddose ausgebildet ist, die mittels von vorn zugänglichen Schrauben verstellbare Befestigungsmittel sowie eine Ausbildung zur Befestigung von elektrotechnischen Funktionsteilen aufweist.

Weiter ist vorgesehen, dass der Hilfsrahmen Mittel aufweist, mittels derer in Montagesolllage eine eingeschobene Installationsdose, insbesondere Hohlwanddose, fixierbar, verrastbar oder in sonstiger Weise lagesicherbar ist.

Um die Verstellung der mechanischen Befestigungsmittel für den Handwerker zu erleichtern, insbesondere bei einer Anordnung analog Anspruch 7, ist vorgesehen, dass ein rohrartiges oder stabartiges Werkzeug vorgesehen ist, welches bei in Montagesolllage in eine Lochung eingebrachter Installationsdose oder eingebrachtem Hilfsrahmen in die Installationsdose oder den Hilfsrahmen einschiebbar ist und mittels dessen dabei die Befestigungsmittel in die Montagesolllage zwangsverstellt werden.

Ein solches Werkzeug kann beispielsweise in Form eines Rohres ausgebildet sein oder auch ein massiver Stab sein. Der Querschnitt dieses Werkzeuges ist so bemessen, dass es gut passend in die Installationsdose eingeschoben werden kann oder in den Hilfsrahmen passend eingeschoben werden kann. Die Verschwenkung der mechanischen Befestigungsmittel aus der eingeschwenkten Position in die ausgeschwenkte Montagesollposition wird allein dadurch erreicht, dass das Werkzeug in die Installationsdose eingeschoben wird oder in den Hilfsrahmen eingeschoben wird, wodurch zwangsweise alle Befestigungsmittel nach außen verschwenkt werden und in der Endposition in die Montagesolllage ausgeschwenkt sind. Mittels dieses Werkzeuges kann also das Ausschwenken aller an der Installationsdose oder am Hilfsrahmen angeordneter Befestigungsmittel gleichzeitig erfolgen.

Unter Umständen kann bevorzugt vorgesehen sein, dass das Werkzeug in seiner in Montagesolllage nach außen gerichteten Stirnfläche eine Ausbildung aufweist, die das Einbringen von Befestigungsmitteln, wie Schrauben oder Gewindebolzen ermöglicht.

Gemäß dieser Ausbildung wird das Werkzeug nicht nur dazu benutzt, die Befestigungsmittel in die Montagesolllage zwangszuverschwenken, sondern das Werkzeug verbleibt in der eingeschobenen Solllage, wobei vorzugsweise die Stirnfläche des Werkzeuges in der Fluchtlinie der Mündung der Installationsdose oder des Hilfsrahmens liegt. Diese nach außen gerichtete Stirnfläche hat Ausbildungen, die das Einbringen von Befestigungsmitteln wie Schrauben oder dergleichen ermöglicht. Beispielsweise könnte diese Stirnfläche aus einer Materialschicht bestehen, in die Schneidschrauben oder dergleichen eingeschraubt werden können. Es kann auch vorgesehen sein, dass die Stirnfläche Lochungen aufweist, in die selbstschneidende oder selbstfurchende Schrauben eingeschraubt werden können. Auf diese Weise bildet die Installationsdose oder der Hilfsrahmen mit dem eingesetzten Werkzeug ein Installationselement, an welchem andere Gegenstände befestigt werden können, die außenseitig der Gebäudefassade anzuordnen sind, beispielsweise ein Briefkasten, eine Leuchte oder andere Gebrauchsgegenstände.

Ausführungsbeispiele der Erfindung sind in der Zeichnung dargestellt und im Folgenden näher beschrieben.

Es zeigt :
- Figur 1 bis 8: eine erste Ausführungsform in unterschiedlichen Ansichten;
- Figur 9 bis 12: eine zweite Ausführungsform der Erfindung;
- Figur 13 und 13: zeigen ein Werkzeug für die Befestigung der erfindungsgemäßen Dose oder des Hilfsrahmens in unterschiedlichen Ansichten;
- Figur 15: die Anordnung einer erfindungsgemäßen Installationsdose in einer Hohlwand, von der Hinterseite der Hohlwand her gesehen;
- Figur 16: desgleichen in Seitenansicht in der Montagesollage;
- Figur 17: die Anordnung einer Installationsdose in einer mehrlagigen Hohlwandschicht, die beispielsweise aus Gipskartonplatten und Wärmedämmschichten bestehen kann, in Seitenansicht gesehen;
- Figur 18: desgleichen in einer um 90 ° gedrehten Position der Installationsdose;
- Figur 19: die Installationsdose in der Einbaulage von der Hinterseite der mehrlagigen Hohlwand her gesehen.

Alle Ausführungsformen betreffen eine Anordnung zur Befestigung einer Installationsdose 1 für Elektroinstallationen in einer Wand, einer Hohlwand oder in einer wärmegedämmten Fassade von Gebäuden. Beispielsweise ist auf das Mauerwerk einer wärmegedämmten Fassade eine Dämmschicht aufgebracht, die wiederum von einer Putzschicht abgedeckt ist. Zum Einbringen von Installationsdosen ist in eine derartige Fassade eine Ausnehmung eingebracht, die je nach Ausbildung bis auf das Grundmauerwerk reichen kann. Eine solche Ausnehmung dient zur Aufnahme mindestens einer Installationsdose. Es ist auch möglich, mehrere solcher Ausnehmungen nebeneinander oder übereinander anzuordnen, so dass in einem bestimmten Bereich der Fassade mehrere Installationsdosen nebeneinander oder übereinander angeordnet werden können.

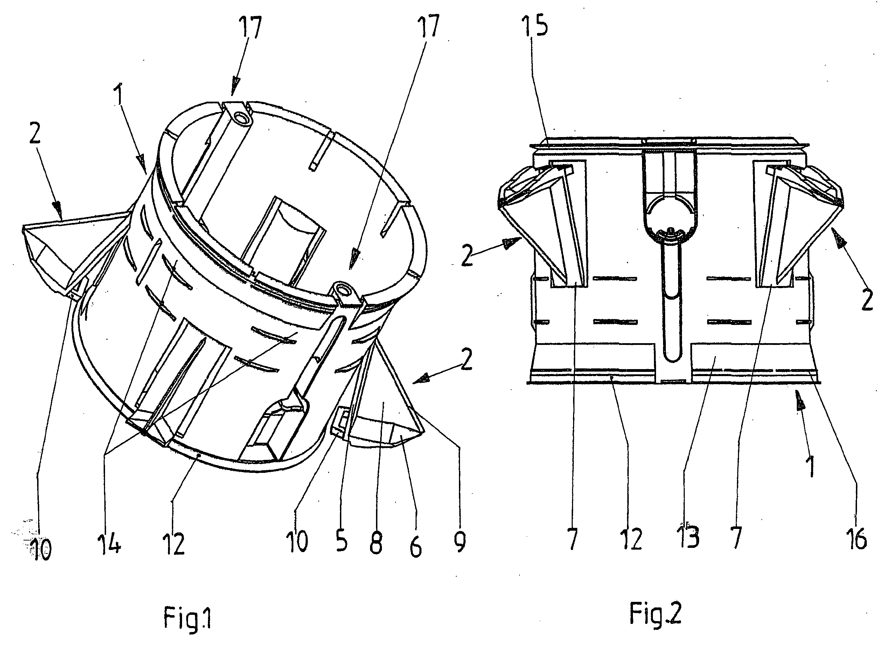

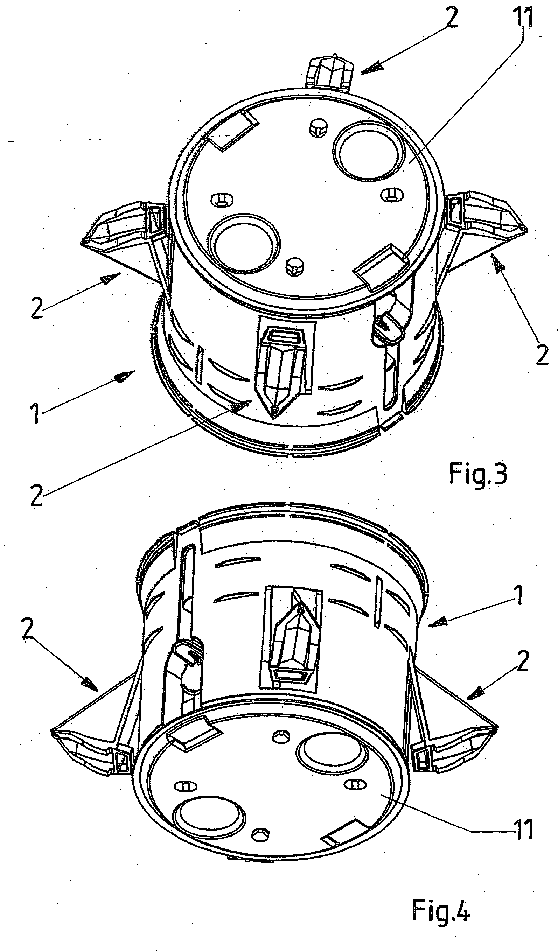

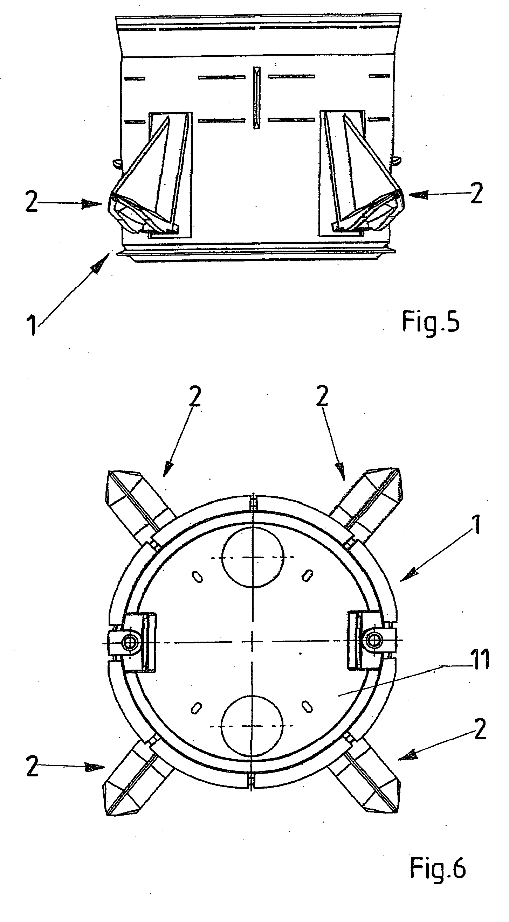

Gemäß Ausführungsform nach Figur 1 bis 8 weist die Installationsdose 1 mechanische Befestigungsmittel 2 auf, die in einer Vormontagelage in eine Position eingestellt sind, in der sie in der Umfangsfluchtlinie der Installationsdose liegen oder hinter dieser Umfangsfluchtlinie zurücklegen. Die Installationsdose 1 weist im Ausführungsbeispiel zylindrische Form auf und hat einbauseitig hinten liegend einen Boden sowie vorn liegend eine Einsatzöffnung zum Einsetzen von elektrotechnischen Ausrüstungen.

In einer Montagesolllage, die in den Figuren 1 bis 8 gezeigt ist, sind die mechanischen Befestigungsmittel 2 in eine Position eingestellt, in der sie über die Umfangsfluchtlinie der Installationsdose 1 vorragen.

In der eingezogenen Position der Befestigungsmittel 2 kann die Installationsdose 1 zwanglos in die entsprechende Ausnehmung eingeschoben werden. Werden dann die Befestigungsmittel 2 in die Position eingestellt, in der sie über die Umfangsfluchtlinie der Installationsdose 1 vorragen, so greifen diese Befestigungsmittel 2 zum Beispiel in die Dämmschicht der wärmegedämmten Fassade ein und verankern die Installationsdose 1 somit in dieser Fassade.

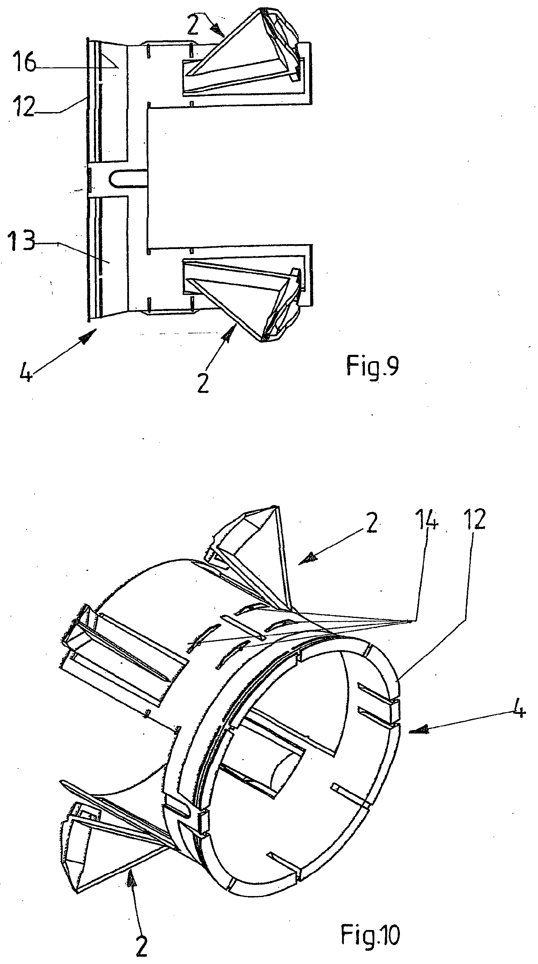

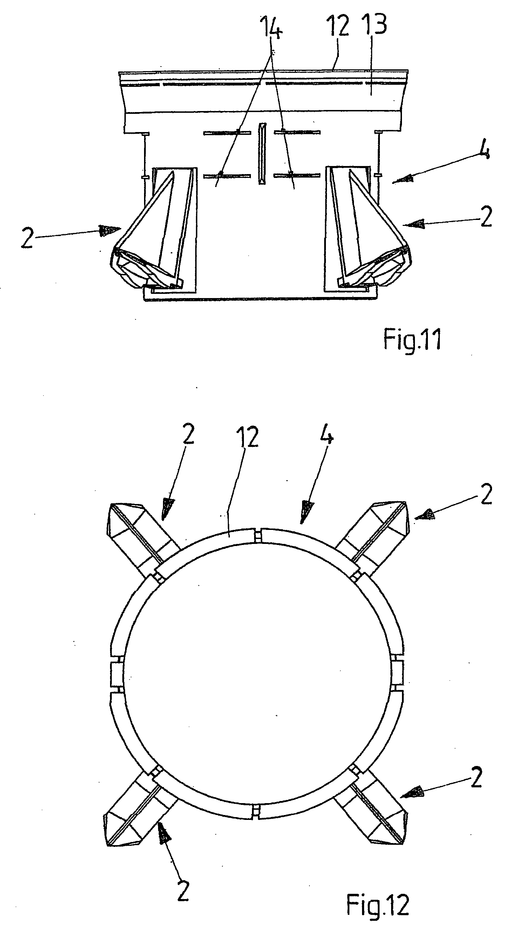

Bei der Ausführungsform gemäß Figur 9 bis 12 ist ein Hilfsrahmen 4 vorgesehen, der wiederum mechanische Befestigungsmittel 2 aufweist, die in einer Vormontagelage in eine Position eingestellt sind, in der sie in der Umfangsfluchtlinie des Hilfsrahmens 4 liegen. Der Hilfsrahmen 4 hat im Prinzip einen zylindrischen Querschnitt und ist an beiden Enden offen ausgebildet, wobei die Wandungen des Hilfsrahmens teilweise durch Materialteile gebildet sind, an denen die mechanischen Befestigungsmittel 2 angeordnet sind. Vorzugsweise mündungsseitig ist dieser Hilfsrahmen geschlossen, also als ringförmiges Element ausgebildet. Ein solcher Hilfsrahmen kann in eine entsprechende Ausnehmung einer Fassade eingesetzt werden. Befindet er sich in dieser Position, können die Befestigungsmittel 2 in eine Position verstellt werden, in der sie über die Umfangsfläche des Hilfsrahmens 4 vorragen, wie aus den Zeichnungsfiguren 9 bis 12 ersichtlich ist. In dieser Position ist der Hilfsrahmen 4 dann in der Ausnehmung der Fassade verankert. Anschließend kann in den Hilfsrahmen 4 eine übliche Installationsdose, beispielsweise eine Hohlwanddose, insbesondere eine Installationsdose 1 eingeschoben werden, die dann natürlich nicht zusätzlich entsprechende Befestigungsmittel 2 aufweist, sondern ohne solche Befestigungsmittel ausgebildet ist. Diese Installationsdose üblicher Bauart, kann, wie gesagt, in den Hilfsrahmen 4 eingeschoben werden und mit diesem gegebenenfalls verrastet sein.

Bei allen Ausführungsbeispielen sind die Befestigungsmittel 2 integrale Bestandteile der Installationsdose 1 beziehungsweise des Hilfsrahmens 4. Dabei sind die Befestigungsmittel 2 nahe des in Montagesolllage außen liegenden Randes der Installationsdose 1 oder des Hilfsrahmens 4 angeformte Formteile. Als außen liegender Rand wird der Rand bezeichnet, der in der Einbausolllage im Wesentlichen mit der Außenfläche der entsprechenden Fassade oder Wand abschließt. Die Formteile 2 sind dabei vorzugsweise hakenartig ausgebildet, wobei deren Schaft 5 an der Installationsdose 1 beziehungsweise dem Hilfsrahmen 4 mit seinem Ende schwenkbeweglich angeformt ist, während deren Hakenspitze 6 etwa rechtwinklig vom Schaft 5 abragend nach radial außen gerichtet ist.

Die Länge des Schaftes 5 entspricht etwa der Länge der Installationsdose 1 beziehungsweise der Länge des Hilfsrahmens 4, wobei die Hakenspitze 6 eine Länge hat, die maximal dem Radius der Installationsdose 1 beziehungsweise des Hilfsrahmens 4 entspricht oder mindestens zwei Drittel des Radius beträgt, so dass die Hakenspitze 6 in Montagesolllage, zum Beispiel tief in die Dämmschicht der Fassade eingreift und das entsprechende Teil verankert.

Im Ausführungsbeispiel ist die Schwenkachse 7 rechtwinklig zur Mittellängsachse der Installationsdose 1 oder des Hilfsrahmens 4 gerichtet, wobei die Schwenkachse 7 beispielsweise durch ein Filmscharnier gebildet sein kann.

Das hakenartige Formteil ist zusätzlich durch eine angeformte, etwa dreieckige Wandung 8 versteift, die mit einer Randkante am Schaft 5 und mit einer Randkante am Haken 6 angeformt ist und deren freie Randkante 9 eine radial nach außen gerichtete Schneidkante bildet. Sofern die Befestigungsmittel 2 in die Befestigungslage verstellt werden, also nach radial außen verstellt werden, wie in den Zeichnungsfiguren ersichtlich, greift nicht nur der Haken 6, sondern zusätzlich auch die Randkante 9 in das umgebende Material, zum Beispiel das Dämmmaterial ein, so dass eine vorzügliche Lagesicherung der Installationsdose 1 beziehungsweise des Hilfsrahmens 4 in der Ausnehmung gewährleistet ist.

Zusätzlich weisen die hakenartigen Formteile auf ihrer dem Inneren der Installationsdose 1 oder des Hilfsrahmens 4 zugewandten Seite nahe dem freien Ende des Schaftes 5 einen Handhabungsansatz 10 auf. Sofern die Befestigungsmittel 2 ausgeschwenkt sind, der Monteur aber die Installationsdose 1 oder den Hilfsrahmen 4 nochmals aus der entsprechenden Ausnehmung entnehmen möchte, so kann er beispielsweise mit der Klinge eines Schraubendrehers in den Handhabungsansatz 10 eingreifen und somit das Befestigungsmittel 2 nach innen verschwenken (in das Innere der Installationsdose 1 beziehungsweise in den Innenraum des Hilfsrahmens 4). Sobald die Befestigungsmittel 2 vollständig eingeschwenkt sind, also in der Kontur der Installationsdose 1 oder in der Umfangskontur des Hilfsrahmens 4 liegen, kann die Installationsdose 1 oder der Hilfsrahmen 4 aus der Ausnehmung entnommen werden.

In den Zeichnungsfiguren ist die ausgeschwenkte Lage der Befestigungsmittel 2 etwas übertrieben gezeigt, so dass die Handhabungsansätze außerhalb des Dosenmantels beziehungsweise des Mantels des Hilfsrahmens 4 liegen. In der Praxis ist die Ausschwenkbewegung der Befestigungsmittel 2 schon beendet, wenn der Schaft 5 in der vom Mantel der Installationsdose 1 oder vom Hilfsrahmen 4 aufgespannten Fläche liegt. Die Handhabungsansätze liegen dann noch im Inneren der Installationsdose 1 beziehungsweise des Hilfsrahmens 4.

Vorzugsweise ist die Hakenspitze 6 des Formteils als spitzes Flächenteil ausgebildet, dessen Flächenerstreckung in der Vormontage etwa parallel zur Mündungsebene der Installationsdose 1 öder des Hilfsrahmens 4 ausgerichtet ist. Durch diese flächige Ausbildung des Hakens wird sichergestellt, dass die Befestigungsmittel 2 in erheblichem Maße Auszugskräften entgegenwirken können, die auf die Installationsdose 1 oder den Hilfsrahmen 4 aufgebracht werden könnten, wenn dieser beziehungsweise diese unsachgemäß mit Zugkräften belastet wird.

Bei den Ausführungsformen nach Figur 1 bis Figur 12 sind die Befestigungsmittel 2 jeweils als Ausschnitte des Mantels der Installationsdose 1 beziehungsweise des Hilfsrahmens 4 ausgebildet. Der Mantel weist jeweils einen Fensterausschnitt auf, durch den das Befestigungsmittel 2 nach außen beziehungsweise nach innen schwenkbar ist, wobei der mündungsnahe Rahmenteil des Fensterausschnittes die Schwenkachse des Befestigungsmittels 2 bildet.

Wie schon mehrfach ausgeführt, weist die Installationsdose 1 oder der Hilfsrahmen 4 eine im Wesentlichen zylindrische Form auf. Am in Montagesolllage außen liegenden Ende ist ein Flanschrand 12 ausgebildet. Im Anschluss an den Flanschrand 12 weist die Installationsdose 1 oder der Hilfsrahmen 4 einen ringförmigen Mantelbereich auf, dessen Außendurchmesser zum Flanschrand 12 hin zunimmt, so dass ein konischer Mantelbereich 13 gebildet ist. Hierdurch wird eine gute Abstützung bezüglich der Ausnehmung in der Wandung oder Wärmedämmschicht erreicht, wobei diese Abstützung vorzugsweise in der Schicht erfolgt, in der der Putz aufgebracht ist.

Zusätzlich sind mit Abstand vom Flanschrand 12 auf dem Außenmantel der Installationsdose 1 oder gegebenenfalls auf dem Außenmantel des Hilfsrahmens 4 sich in Umfangsrichtung erstreckende Rippen oder Rippengruppen 14 ausgebildet. Hierdurch wird der sichere Sitz in der Wandung oder der Dämmschicht verbessert.

Am Mantel der Installationsdose 1 ist nahe des Bodens 11 eine umlaufende, radial vorragende Dichtlippe 15 ausgebildet, die vorzugsweise aus elastischem Werkstoff besteht. Hierdurch wird eine zugluftdichte Abdichtung gegenüber der Lochlaibung erreicht, in welche die Installationsdose 1 eingesetzt ist. Zusätzlich kann auch nahe des Flanschrandes 12 vorzugsweise im Bereich des konischen Mantelteiles 13 eine radial vorragende in Umfangsrichtung verlaufende Dichtlippe 16 ausgebildet sein, die ebenfalls vorzugsweise aus elastischem Werkstoff besteht.

Im Ausführungsbeispiel ist die Installationsdose 1 als an sich übliche Hohlwanddose ausgebildet, die mittels von vorn zugänglicher Schrauben verstellbare Befestigungsmittel aufweist. Eine solche Anordnung kann in dem Bereich,17 vorgesehen sein. Auch können im Inneren der Dose Anordnungen zur Befestigung von elektrotechnischen Funktionsteilen vorgesehen sein, wie dies bei Hohlwanddosen üblich ist.

Der Hilfsrahmen 4 kann wiederum Mittel aufweisen, mittels derer in Montagesolllage eine eingeschobene übliche Installationsdose 1, insbesondere eine Hohlwanddose, fixierbar, verrastbar oder in sonstiger Weise lagesicherbar ist.

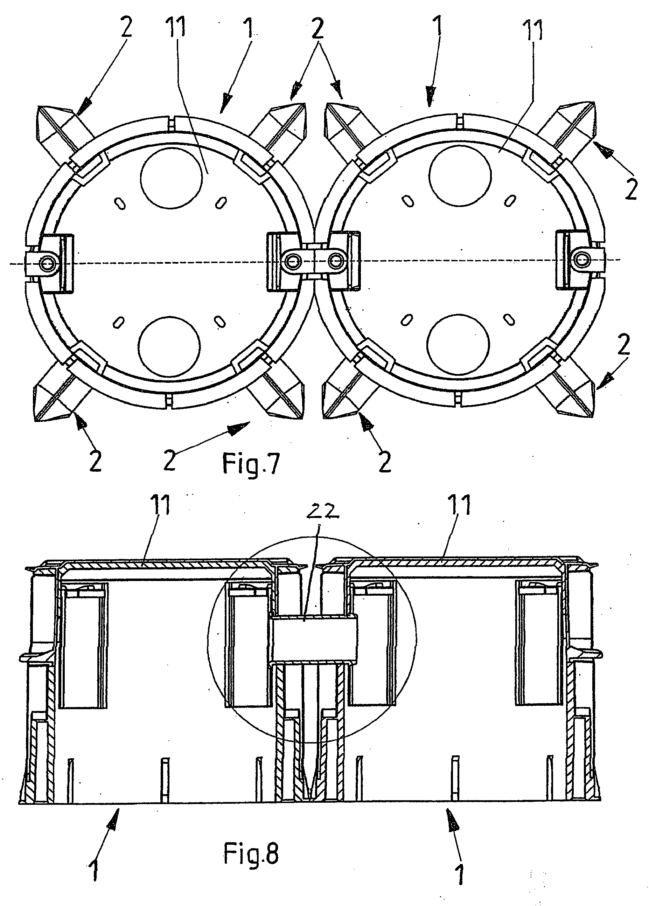

In Figur 7 und 8 ist eine Einbausituation verdeutlicht, bei der zwei Installationsdosen 1 nebeneinander angeordnet sind. Die vorzugsweise vier auf den Mantel verteilt angeordneten Befestigungsmittel 2 sind dabei so angeordnet, dass sie das Anreihen der Installationsdosen 1 aneinander nicht behindern. Der Mantel der Installationsdosen 1 weist im direkt benachbarten Bereich jeweils einen Durchbruch auf, wobei durch die Durchbrüche ein rohrartiges Verbindungsteil 22 gesteckt ist, welches die Durchführung von Kabeln oder dergleichen ermöglicht.

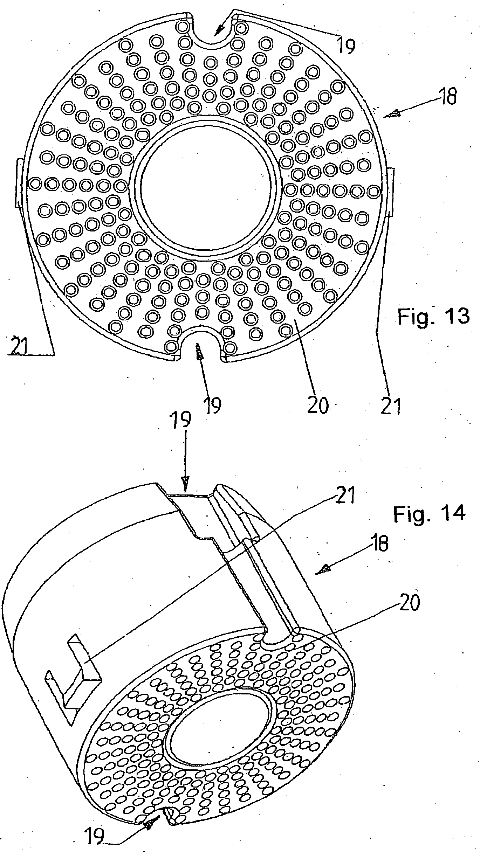

In Figur 13 und 14 ist ein rohrartiges oder stabartiges Werkzeug 18 gezeigt, welches dazu dient, die Befestigungsmittel 2 aus der eingeschwenkten Lage in die ausgeschwenkte Montagelage zu zwingen. Bei der Montage wird zunächst die Installationsdose 1 oder der Hilfsrahmen 4 in die entsprechende Ausnehmung eingebracht. Anschließend wird das rohrartige oder stabartige Werkzeug 18 in die Installationsdose 1 eingeschoben oder in den Hilfsrahmen 4 eingeschoben. Dabei werden zwangsweise alle Befestigungsmittel 2 aus der eingeschwenkten Lage in die ausgeschwenkte Montagesolllage zwangsverstellt. Das Werkzeug 18 hat entsprechende Konturen 19, die in den Innenraum der Installationsdose 1 vorragende Elemente (bei 17) aufnehmen können. Die Stirnfläche des Werkzeuges 18 kann normalerweise als geschlossene Fläche ausgebildet sein. Im Ausführungsbeispiel ist die in Montagesolllage nach außen gerichtete Stirnfläche 20 mit einer Vielzahl von Lochungen versehen, die zum Einbringen von Befestigungsmitteln wie Schrauben oder Gewindebolzen bestimmt sind. Zusätzlich kann das Werkzeug 18 über entsprechende Rastmittel 21 in der Installationsdose 1 oder im Hilfsrahmen 4 fixiert werden, so dass dieses Werkzeug in der Dose beziehungsweise in dem Rahmen verbleibt. In diesem Falle dient die Stirnfläche 20 des Werkzeuges 18 zur Befestigung von Gebrauchsgegenständen mittels Schrauben oder dergleichen an der Außenfläche der Fassade. Vorzugsweise schließt die Stirnfläche 20 in der eingedrückten Situation bündig mit dem Flanschrand 12 der Dose 1 oder des Hilfsrahmens 4 ab.

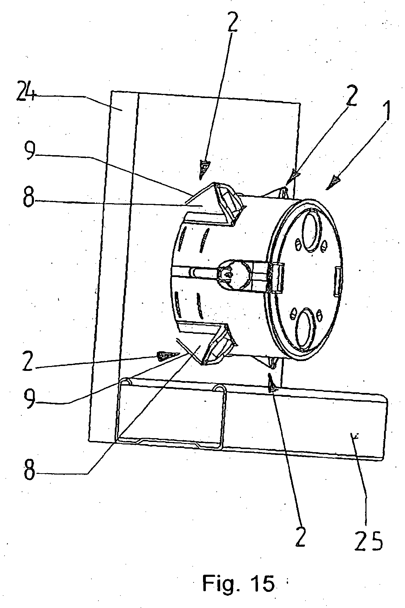

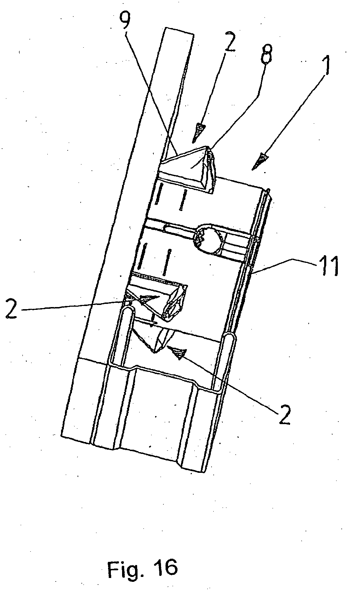

Nach dem Ausführungsbeispiel gemäß Figur 15 und 16 ist beispielsweise eine einlagige Hohlwand 24 vorgesehen, die mittels bekannter Installationsträger 25 an einem Grundmauerwerk oder anderen ortsfesten Bestandteilen fixiert werden kann. Es wird somit hinter dieser Hohlwand 24 ein Hohlraum gebildet. Zur Anordnung einer entsprechenden Installationsdose 1 wird die beispielsweise aus einer Gipskartonplatte bestehende Außenfläche der Hohlwand 24 mit einer Lochung versehen, in die die Installationsdose 1 eingesetzt werden kann. In der Vormontagelage sind die entsprechenden Befestigungsmittel 2 der Installationsdose 1 in den Innenraum der Installationsdose 1 verschwenkt, so dass sie hinter der Umfangsfluchtlinie der Installationsdose 1 zurückliegen oder gerade eben in dieser Umfangsfluchtlinie liegen. Nach dem Einsetzen in die Lochung der Hohlwand 24 können die Befestigungsmittel 2 mittels geeigneter Handhabung ausgeschwenkt werden, so dass eine Position erreicht wird, wie in den Zeichnungsfiguren gezeigt ist. Dabei greifen die Befestigungsmittel 2 insbesondere mit der relativ scharfen freien Randkante 9 einer dreieckigen Wandung 8 des Befestigungsmittels 2 teilweise in das Material der Hohlwand 24 ein. Teilweise erfolgt die Verspreizung in den hinter der Hohlwand 24 befindlichen Hohlraum. Es wird auf diese Weise eine Befestigung der Installationsdose erreicht, wie sie aus den Zeichnungsfiguren 18 und 19 ersichtlich ist.

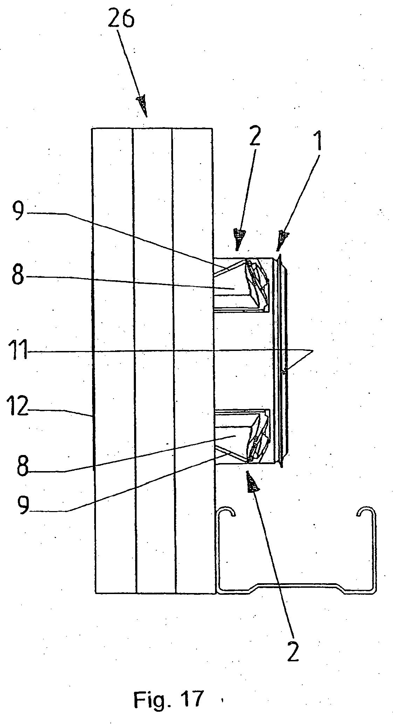

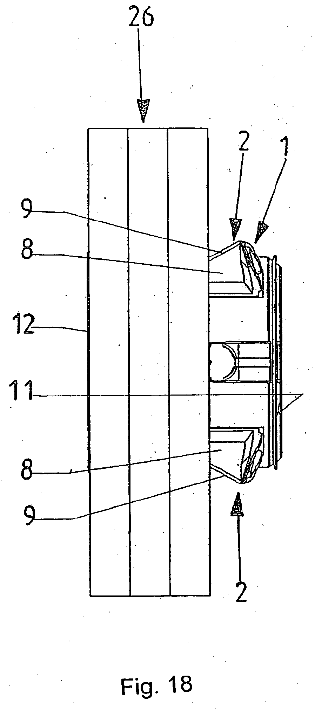

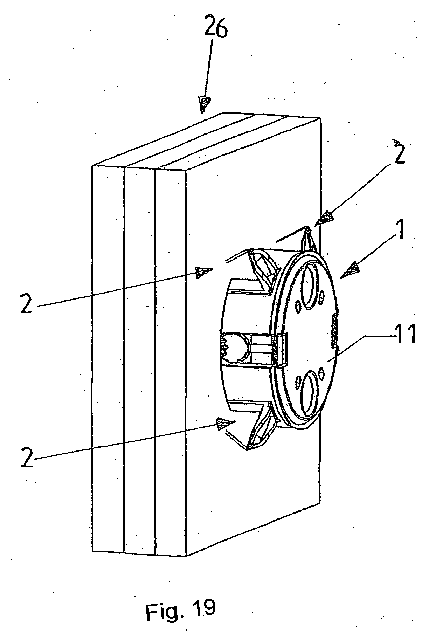

In ähnlicher Weise erfolgt diese Befestigung bei mehrlagigen Hohlwänden 26, wie dies in Figur 17 bis 19 gezeigt ist. Solche mehrlagigen Hohlwände 26 können beispielsweise aus einer außen liegenden Gipskartonplatte mit dahinter liegenden Dämmschichten, beispielsweise aus Polyurethan-Schaumplatten bestehen.

Bei der Anordnung der Installationsdose in einer solchen mehrlagigen Hohlwand 26 wird wiederum eine entsprechende Lochung in der mehrlagigen Hohlwand 26 erzeugt, in welche die Installationsdose 1 mit eingeschwenkten Befestigungsmitteln 2 eingeschoben werden kann. In der Solllage, wenn sich der Flanschrand 12 der Installationsdose 1 an der Außenfläche der mehrlagigen Hohlwand 26 abstützt, können die Befestigungsmittel 2 ausgeschwenkt werden, so dass sie die Lage einnehmen, die in den Zeichnungsfiguren gezeigt ist. Auch dabei weist wieder die freie Randkante 9 einer dreieckigen Wandung 8 des Befestigungsmittel 2 teilweise in die Materialschichten der mehrlagigen Hohlwand 26 ein und ist mit einem Teil hinter dieser mehrlagigen Hohlwand 26 angeordnet. Es wird hiermit ein sicherer und fester Sitz der Installationsdose 1 auch in dieser mehrlagigen Hohlwand 26 erreicht.

## Patentansprüche

1. Anordnung zur Befestigung einer Installationsdose (1) für Elektroinstallationen in einer Wand, einer Hohlwand oder einer wärmegedämmten Wandung oder Fassade von Gebäuden, wobei die Wand oder die Fassade eine Ausnehmung, einen Durchbruch oder eine sacklochartige Ausnehmung zur Aufnahme oder zum Einsetzen der Installationsdose (1) aufweist, wobei die Installationsdose (1) mechanische Befestigungsmittel (2,3) aufweist, die in einer Vormontagelage in eine Position eingestellt sind, in der sie in der Umfangsfluchtlinie der Installationsdose (1) liegen oder hinter der Umfangsfluchtlinie zurückliegen, und die in einer Montagesolllage in eine Position eingestellt sind, in der sie über die Umfangsfluchtlinie der Installationsdose (1) vorragen, wobei die Befestigungsmittel (2) Formteile sind, die integrale Bestandteile der Installationsdose (1) sind, **dadurch gekennzeichnet, dass** die Formteile hakenartig ausgebildet sind, wobei deren Schaft (5) an der Installationsdose (1) schwenkbeweglich angeformt ist und deren Hakenspitze (6) etwa rechtwinklig vom Schaft (5) abragend nach radial außen gerichtet ist.

2. Anordnung zur Befestigung einer Installationsdose (1) für Elektroinstallationen in einer Wand, einer Hohlwand oder einer wärmegedämmten Wandung oder Fassade von Gebäuden, wobei die Wand oder die Fassade eine Ausnehmung, einen Durchbruch oder eine sacklochartige Ausnehmung zur Aufnahme oder zum Einsetzen der Installationsdose (1) aufweist, wobei ein Hilfsrahmen (4) vorgesehen ist, der mechanische Befestigungsmittel (2,3) aufweist, die in einer Vormontagelage in eine Position eingestellt sind, in der sie in der Umfangsfluchtlinie des Hilfsrahmens (4) liegen oder hinter der Umfangsfluchtlinie zurückliegen, und die in einer Montagesolllage in eine Position eingestellt
sind, in der sie über die Umfangsfluchtlinie des Hilfsrahmens (4) vorragen, und in den Hilfsrahmen (4) bei in Montagesollposition befindlichen Befestigungsmitteln (2,3) die Installationsdose (1) einschiebbar ist, wobei die Befestigungsmittel (2) Formteile sind, die integrale Bestandteile des Hilfsrahmens (4) sind, **dadurch gekennzeichnet, dass** die Formteile hakenartig ausgebildet sind, wobei deren Schaft (5) an dem Hilfsrahmen (4) schwenkbeweglich angeformt ist und deren Hakenspitze (6) etwa rechtwinklig vom Schaft (5) abragend nach radial außen gerichtet ist.

3. Anordnung nach einem der Ansprüche 1 oder 2, **dadurch gekennzeichnet, dass** die Befestigungsmittel (2) nahe des in Montagesolllage außenliegenden Randes der Installationsdose (1) oder des Hilfsrahmens (4) schwenkbeweglich angeformte Formteile sind.

4. Anordnung nach einem der Ansprüche 1 bis 3, **dadurch gekennzeichnet, dass** die Schwenkachse parallel zur Mittellängsachse der zylindrisch ausgebildeten Installationsdose (1) oder des zylindrisch ausgebildeten Hilfsrahmens (4) ausgerichtet ist.

5. Anordnung nach einem der Ansprüche 1 bis 3, **dadurch gekennzeichnet, dass** die Schwenkachse (7) quer insbesondere rechtwinkelig zur Mittellängsachse der Installationsdose (1) oder des Hilfsrahmens (4) gerichtet verläuft.

6. Anordnung nach einem der Ansprüche 1 bis 5, **dadurch gekennzeichnet, dass** das hakenartige Formteil durch eine angeformte etwa dreieckige Wandung (8) versteift ist, die mit einer Randkante am Schaft (5) und mit einer Randkante am Haken (6) angeformt ist und deren freie Randkante (9) eine radial nach außen gerichtete Schneidkante bildet.

7. Anordnung nach einem der Ansprüche 1 bis 6, **dadurch gekennzeichnet, dass** die hakenartigen Formteile auf ihrer dem Inneren der Installationsdose (1) oder des Hilfsrahmens (4) zugewandten Seite, vorzugsweise nahe des freien Endes des Schaftes (5), einen Handhabungsansatz (10) aufweisen, so dass sie durch Angriff an diesem manuell oder mittels eines Werkzeuges aus der Montagesolllage in die Vormontagelage zurück bewegbar sind.

8. Anordnung nach einem der Ansprüche 1 bis 7, **dadurch gekennzeichnet, dass** die Hakenspitze (6) des Formteils als spitzes Flächenteil ausgebildet ist, dessen Flächenerstrecküng in der Vormontagelage parallel zur Mündungsebene der Installationsdose (1) oder des Hilfsrahmens (4) gerichtet ist.

9. Anordnung nach einem der Ansprüche 1 bis 8, **dadurch gekennzeichnet, dass** die Installationsdose (1) oder der Hilfsrahmen (4) im Wesentlichen zylindrisch ausgebildet sind und am in Montagesolllage außenliegenden Ende einen Flanschrand (12) aufweisen.

10. Anordnung nach Anspruch 9, **dadurch gekennzeichnet, dass** die Installationsdose (1) oder der Hilfsrahmen (4) im Anschluss an den Flanschrand (12) einen ringförmigen Mantelbereich (13) aufweisen, dessen Außendurchmesser zum Flanschrand (12) hin zunimmt, so dass ein konischer Mantelteilbereich gebildet ist.

11. Anordnung nach einem der Ansprüche 9 oder 10, **dadurch gekennzeichnet, dass** mit Abstand vom Flanschrand (12) auf dem Außenmantel der Installationsdose (1) oder auf Außenmantelteilflächen des Hilfsrahmens (4) sich in Umfangsrichtung erstreckende Rippen (14) oder Rippengruppen ausgebildet sind.

12. Anordnung nach einem der Ansprüche 9 bis 11, **dadurch gekennzeichnet, dass** die Installationsdose (1) einen Boden (11) an ihrem dem Flanschrand (12) abgewandten Ende aufweist, wobei am Mantel bodennah eine umlaufende, radial vorragende Dichtlippe (15) ausgebildet ist, vorzugsweise aus elastischem Werkstoff.

13. Anordnung nach einem der Ansprüche 9 oder 10, **dadurch gekennzeichnet, dass** nahe des Flanschrandes (12) vorzugsweise im Bereich des konischen Mantelbereiches (13) eine radial vorragende, in Umfangsrichtung verlaufende Dichtlippe (16) ausgebildet ist, vorzugsweise aus elastischem Werkstoff.

14. Anordnung nach einem der Ansprüche 1 bis **13, dadurch gekennzeichnet, dass** die Installationsdose (1) als übliche Hohlwanddose ausgebildet ist, die mittels von vorn zugänglichen Schrauben verstellbare Befestigungsmittel sowie eine
ausbildung zur Befestigung von elektrotechnischen Funktionsteilen aufweist.

15. Anordnung nach Anspruch 2, **dadurch gekennzeichnet, dass** der Hilfsrahmen (4) Mittel aufweist, mittels derer in Montagesolllage eine eingeschobene Installationsdose (1), insbesondere Hohlwanddose, fixierbar, verrastbar oder in sonstiger Weise lagesicherbar ist.

16. Anordnung nach einem der Ansprüche 1 bis 15, **dadurch gekennzeichnet, dass** ein rohrartiges oder stabartiges Werkzeug (18) vorgesehen ist, welches bei in Montagesolllage in eine Lochung eingebrachter Installationsdose (1) oder eingebrachtem Hilfsrahmen (4) in die Installationsdose (1) oder den Hilfsrahmen (4) einschiebbar ist und mittels dessen dabei die Befestigungsmittel (2) in die Montagesolllage zwangsverstellt werden.

17. Anordnung nach Anspruch 16, **dadurch gekennzeichnet, dass** das Werkzeug (18) in seiner in Montagesolllage nach außen gerichteten Stirnfläche (20) eine Ausbildung aufweist, die das Einbringen von Befestigungsmitteln, wie Schrauben oder Gewindebolzen ermöglicht.

## Claims

1. An arrangement for fixing an installation box (1) for electrical purposes in a wall, a cavity wall, or a thermally insulated wall or façade of buildings, the wall or the façade including a recess, a aperture, or a blind hole-like recess for receiving or for inserting the installation box (1), the installation box (1) including mechanical fixing means (2, 3) that are adjusted, in a pre-mounting position, into a position where they are in peripheral alignment with the installation box (1) or behind peripheral alignment therewith, and that are adjusted, in an intended mounting position, into a position where they protrude beyond peripheral alignment with the installation box (1), the fixing means (2) being shaped parts as integral components of the installation box (1), **characterized by** that the shaped parts have a hook-like shape, the shaft (5) of which is formed at the installation box (1) in a pivoting manner and the hook tip (6) of which is arranged in an radially outwardly protruding manner at approximately right angles from the shaft (5).

2. An arrangement for fixing an installation box (1) for electrical purposes in a wall, a cavity wall, or a thermally insulated wall or façade of buildings, the wall or the façade including a recess, a aperture or a blind hole-like recess for receiving or for inserting the installation box (1), an auxiliary frame (4) being provided that includes mechanical fixing means (2, 3), that are adjusted, in a pre-mounting position, into a position where they are in peripheral alignment with the auxiliary frame (4) or behind peripheral alignment therewith, and that are adjusted, in an intended mounting position, into a position where they protrude beyond peripheral alignment with the auxiliary frame (4), and when the fixing means (2, 3) are in the intended mounting position, the installation box (1) being insertable into the auxiliary frame (4), the fixing means (2) being shaped parts as integral components of the auxiliary frame (4), **characterized by** that the shaped parts have a hook-like shape, the shaft (5) of which is formed at the auxiliary frame (4) in a pivoting manner and the hook tip (6) of which is arranged in an radially outwardly protruding manner at approximately right angles from the shaft (5).

3. The arrangement according to one of claims 1 or 2, **characterized by** that the fixing means (2) are shaped parts integrally formed in a pivoting manner close to the outside edge the installation box (1) or of the auxiliary frame (4), in the intended mounting position.

4. The arrangement according to one of claims 1 to 3, **characterized by** that the pivot axis is oriented in parallel to the central longitudinal axis of the cylindrically configured installation box (1) or of the cylindrically configured auxiliary frame (4).

5. The arrangement according to one of claims 1 to 3, **characterized by** that the pivot axis (7) extends transversely, in particular perpendicularly to the central longitudinal axis of the installation box (1) or of the auxiliary frame (4).

6. The arrangement according to one of claims 1 to 5, **characterized by** that the hook-like shaped part is stiffened by means of an integrally formed approximately triangular wall (8) that is integrally formed with an end edge at the shaft (5) and with an end edge at the hook (6) and the free end edge (9) of which forms a radially outwardly directed cutting edge.

7. The arrangement according to one of claims 1 to 6, **characterized by** that the hook-like shaped parts include, on their side facing the interior of the installation box (1) or of the auxiliary frame (4), preferably close to the free end of the shaft (5), a handling projection (10), so that by gripping the latter, they can be mowed manually or by means of a tool from the intended mounting position back into the pre-mounting position.

8. The arrangement according to one of claims 1 to 7, **characterized by** that the hook tip (6) of the shaped part is configured as a sharp planar piece, the planar extension of which, in the pre-mounting position, is in parallel to the opening plane of the installation box (1) or of the auxiliary frame (4).

9. The arrangement according to one of claims 1 to 8, **characterized by** that the installation box (1) or the auxiliary frame (4) are substantially cylindrical and include a flange edge (12) at the outside end, in the intended mounting position.

10. The arrangement according to claim 9, **characterized by** that following to the flange edge (12), the installation box (1) or the auxiliary frame (4) includes an annular skirt portion (13), the outer diameter of which increases toward the flange edge (12), so that a tapered skirt partial portion is formed.

11. The arrangement according to one of claims 9 or 10, **characterized by** that in a distance from the flange edge (12), ribs (14) or rib groups extending in the peripheral direction are formed on the outer skirt of the installation box (1) or on outer skirt partial surfaces of the auxiliary frame (4).

12. The arrangement according to one of claims 9 to 11, **characterized by** that the installation box (1) includes a bottom (11) at its end facing away from the flange edge (12), at the skirt close to the bottom a peripheral, radially protruding sealing lip (15) being formed, preferably made of a resilient material.

13. The arrangement according to one of claims 9 or 10, **characterized by** that close to the flange edge (12), preferably in the area of the tapered skirt portion (13), a radially protruding, peripherally extending sealing lip (16) is formed, preferably made of a resilient material.

14. The arrangement according to one of claims 1 to 13, **characterized by** that the installation box (1) is configured as a conventional cavity wall box that includes fixing means being adjustable by means of screws accessible from front, and an arrangement for fixing electrical functional parts.

15. The arrangement according to claim 2, **characterized by** that the auxiliary frame (4) includes means by means of which, in the intended mounting position, an inserted installation box (1), in particular a cavity wall box, is fixable, latchable, or otherwise securable in position.

16. The arrangement according to one of claims 1 to 15, **characterized by** that a tube-type or rod-type tool (18) is provided, which, when in the intended mounting position the installation box (1) or the auxiliary frame (4) is mounted in a hole, can be inserted into the installation box (1) or the auxiliary frame (4), and by means of which then the fixing means (2) are urged into the intended mounting position.

17. The arrangement according to claim 16, **characterized by** that the tool (18) includes in its front face (20) being outwardly directed, in its the intended mounting position, an arrangement enabling the insertion of fixing means, such as screws or threaded bolts.

## Revendications

1. Agencement de fixation d'une boîte d'installation (1) pour appareillages électriques dans une paroi, une paroi creuse, ou une paroi ou façade thermiquement isolée de bâtiments, la paroi ou la façade comportant un logement, une ouverture, ou un logement borgne pour recevoir ou pour insérer la boîte d'installation (1), la boîte d'installation (1) comportant des moyens de fixation (2, 3) mécaniques qui sont réglés, dans une position de pré-montage, dans une position où ils sont en alignement périphérique avec la boîte d'installation (1) ou derrière alignement périphérique avec celle-ci, et qui sont réglés, dans une position de montage de consigne, dans une position où ils font saillie au-delà de l'alignement périphérique avec la boîte d'installation (1), les moyens de fixation (2) étant des pièces préformées d'une seule pièce avec la boîte d'installation (1), **caractérisé en ce que** les pièces préformées ont une forme de crochet, la tige (5) duquel est réalisée à la boîte d'installation (1) de façon pivotante et la pointe du crochet (6) duquel est orientée en saillie radialement vers l'extérieur perpendiculairement à partir de la tige (5).

2. Agencement de fixation d'une boîte d'installation (1) pour appareillages électriques dans une paroi, une paroi creuse, ou une paroi ou façade thermiquement isolée de bâtiments, la paroi ou la façade comportant un logement, une aperture ou un logement borgne pour recevoir ou pour insérer la boîte d'installation (1), un cadre auxiliaire (4) étant prévu qui comporte des moyens de fixation (2, 3) mécaniques qui sont réglés, dans une position de pré-montage, dans une position où ils sont en alignement périphérique avec le cadre auxiliaire (4) ou derrière alignement périphérique avec celui-ci, et qui sont réglés, dans une position de montage de consigne, dans une position où ils font saillie au-delà de l'alignement périphérique avec le cadre auxiliaire (4), et si les moyens de fixation (2, 3) sont dans la position de montage de consigne, la boîte d'installation (1) étant enfichable dans le cadre auxiliaire (4), les moyens de fixation (2) étant des pièces préformées d'une seule pièce avec le cadre auxiliaire (4), **caractérisé en ce que** les pièces préformées ont une forme de crochet, la tige (5) duquel est réalisée au cadre auxiliaire (4) de façon pivotante et la pointe du crochet (6) duquel est orientée en saillie radialement vers l'extérieur perpendiculairement à partir de la tige (5).

3. Agencement selon une des revendications 1 ou 2, **caractérisé en ce que** les moyens de fixation (2) sont des pièces réalisées d'une seule pièce de façon pivotante près du bord extérieur de la boîte d'installation (1) ou du cadre auxiliaire (4), dans la position de montage de consigne.

4. Agencement selon une des revendications 1 à 3, **caractérisé en ce que** l'axe d'articulation est orienté en parallèle à l'axe longitudinal central de la boîte d'installation (1) en forme de cylindre ou du cadre auxiliaire (4) en forme de cylindre.

5. Agencement selon une des revendications 1 à 3, **caractérisé en ce que** l'axe d'articulation (7) s'étend transversalement, en particulier perpendiculairement à l'axe longitudinal central de la boîte d'installation (1) ou du cadre auxiliaire (4).

6. Agencement selon une des revendications 1 à 5, **caractérisé en ce que** la pièce préformée en forme de crochet est rigidifiée au moyen d'une paroi (8) environ triangulaire réalisée d'une seule pièce par un bord à la tige (5) et par un bord au crochet (6) et le bord libre (9) de laquelle forme un bord tranchant dirigé radialement vers l'extérieur.

7. Agencement selon une des revendications 1 à 6, **caractérisé en ce que** les pièces préformées en forme de crochet comportent, de leur côté qui fait face à l'intérieur de la boîte d'installation (1) ou du cadre auxiliaire (4), de préférence près de l'extrémité libre de la tige (5), un ergot de manutention (10), de façon qu'en saisissant ce dernier, ils peuvent être déplacées manuellement ou au moyen d'un outil à partir de la position de montage de consigne en retour dans la position de pré-montage.

8. Agencement selon une des revendications 1 à 7, **caractérisé en ce que** la pointe du crochet (6) de la pièce préformée est réalisée comme une pièce planaire pointue, l'étendue planaire de laquelle est orientée dans la position de pré-montage en parallèle au plan de l'ouverture de la boîte d'installation (1) ou du cadre auxiliaire (4).

9. Agencement selon une des revendications 1 à 8, **caractérisé en ce que** la boîte d'installation (1) ou le cadre auxiliaire (4) sont essentiellement cylindriques et comportent un bord de bride (12) à l'extrémité extérieure, dans la position de montage de consigne.

10. Agencement selon la revendication 9, **caractérisé en ce que** derrière le bord de bride (12), la boîte d'installation (1) ou le cadre auxiliaire (4) comporte une portion d'enveloppe (13) annulaire, le diamètre extérieur de laquelle s'augmente vers le bord de bride (12), de façon qu'une portion partielle d'enveloppe conique soit réalisée.

11. Agencement selon une des revendications 9 ou 10, **caractérisé en ce qu'**à une distance à partir du bord de bride (12), des nervures (14) ou des groupes de nervures s'étendant dans la direction périphérique sont réalisés sur l'enveloppe extérieure de la boîte d'installation (1) ou sur des surfaces partielles de l'enveloppe extérieure du cadre auxiliaire (4).

12. Agencement selon une des revendications 9 à 11, **caractérisé en ce que** la boîte d'installation (1) comporte un fond (11) à son extrémité dirigée à l'opposé du bord de bride (12), à l'enveloppe près du fond une lèvre d'étanchéité (15) périphérique radialement en saillie étant réalisée, de préférence en un matériau élastique.

13. Agencement selon une des revendications 9 ou 10, **caractérisé en ce que** près du bord de bride (12), de préférence dans la zone de la portion d'enveloppe conique (13), une lèvre d'étanchéité (16) périphérique radialement en saillie est réalisée, de préférence en un matériau élastique.

14. Agencement selon une des revendications 1 à 13, **caractérisé en ce que** la boîte d'installation (1) est réalisée comme une boîte de paroi creuse conventionnelle qui comporte des moyens de fixation étant réglables au moyen de vis accessibles à partir du front, et un arrangement de fixation de pièces fonctionnelles électriques.

15. Agencement selon la revendication 2, **caractérisé en ce que** le cadre auxiliaire (4) comporte des moyens par lesquels, dans la position de montage de consigne, une boîte d'installation (1) enfichée, en particulier une boîte de paroi creuse, est fixable, encliquetable, ou peut autrement être rendue solidaire en position.

16. Agencement selon une des revendications 1 à 15, **caractérisé en ce qu'**un outil (18) en forme de tube ou de tige est prévu, qui, si dans la position de montage de consigne la boîte d'installation (1) ou le cadre auxiliaire (4) est monté dans un trou, peut être inséré dans la boîte d'installation (1) ou le cadre auxiliaire (4), et au moyen duquel puis les moyens de fixation (2) sont déplacés de force dans la position de montage de consigne.

17. Agencement selon la revendication 16, **caractérisé en ce que** l'outil (18) comporte dans sa face frontale (20) dirigée vers l'extérieur, dans sa position de montage de consigne, un arrangement permettant l'insertion de moyens de fixation, comme p.ex. des vis ou goujons filetés.
